# EUROPEAN PATENT APPLICATION

(11) **EP 2 716 949 A2**
(43) Date of publication of application: **09.04.2014**
(21) Application number: 13164655.6
(22) Date of filing: 22.04.2013
(51) Int. Cl.: F16L 3/02, F24C 3/08

(54) **A clamping piece facilitating the connection of gas taps and burners to an intermediate distribution pipe**

(30) Priority: 25.09.2012 TR 201210891
(71) Applicant: Turas Gaz Armatürleri Sanayi. Ve Ticaret A.S., 34590 Istanbul (TR)
(72) Inventor: Turhan, Gokhan, 34590 Istanbul (TR); Demirezen, Mehmet, 34590 Istanbul (TR); Gun, Isa, 34590 Istanbul (TR)

(57) **Abstract**

A clamping piece (3) that facilitates the connection of an intermediate distribution pipe (2) to gas taps and burners. The clamping piece is characterized by a lower segment plate (3.1) located in said gas tap body or the gas inlet section of the burner pool (5), an upper segment plate (3.2) located in the distribution pipe (2), and a connection plate (3.3) allowing a rigid connection by associating the said lower segment plate (3.1) with the upper segment plate (3.2).

## Description

### TECHNICAL FIELD

The invention relates to a clamping piece facilitating the connection of gas taps and burners to intermediate distribution pipe, in domestic cookers or ovens. Thanks to the use of the said clamping piece in domestic cookers, costs are decreased and mounting time is shortened.

As known, the gas used in domestic cookers and passing through the taps at a certain flow rate is transferred to the burners where burning takes place by means of intermediate distribution pipes. These intermediate distribution pipes can be connected to the tap gas outlet or burner gas inlet in different connection types. Today, the most commonly used connection type is the one performed with a connector (union). In union connection type, gas outlet section of the tap is threaded and the end of the distribution pipe is blown, thereby forming a stage. However, the union is engaged in the intermediate distribution pipe prior to blowing operation, since the union cannot be inserted after the pipe is blown due to the stage. Thus, after the union is inserted in the intermediate distribution pipe, it leans against the gas outlet of the tap and is compressed by means of a slogging wrench, thereby making it rigid in a way to guarantee the impermeability of the pipe. Even if impermeability is provided in union connection, there are some other problems in this regard. The most important one of these is that the union is locked in the pipe when the end part of the intermediate distribution pipe is blown. Therefore, it is only possible to remove the union by cutting the end part of the pipe. In this manner, the pipe used is wasted and costs are increased. In our invention, no change is needed to be made on the gas tap. Moreover, the mounting process of ovens and cookers takes quite a long time for the producers in case of union connection, because a long time is required for the compression of the thread due to the fact that threaded connection is provided in the current union systems. In our invention, on the other hand, no union is needed for the connection; thus, the mounting thereof is quite practical, with no loss of time, low cost, and an easy mounting process. Again, in case of any breakdown, the connection is easily dismounted by removing the newly developed clamping piece, and after the required intervention is made, the connection of gas tap or burner with the intermediate distribution pipe is made by means of the said clamping piece at a short time. Moreover, the newly developed clamping piece does not have a complicated structure and not many recesses and protrusions are provided thereon. Therefore, the production is very simple.

### STATE OF THE ART

Within the state of the art, there are many applications regarding pipe connections. Now, reference will be made to some applications, at the same time providing the distinctiveness and the novelty of our invention.

The patent application of the firm Volkswagen AG numbered DE 10 2004 060 225 discloses a light and easy-to-dismount connector (2). In Fig. 1 of the application, the said connector (2) is seen within the connection assembly (1). Pipe components referred with reference numerals (3) and (4) and associated with this connector are given. As seen in the connector referred with (2), there are many locking hooks and claws (10, 11) thereon, as well as a plurality of recesses and protrusions, which make the connector rather complicated and difficult to produce. In our invention, unlike the former application, no claws and recesses/protrusions are provided. Thanks to the present invention, intermediate distribution pipe connection in domestic cookers is performed in a way to facilitate mounting process for oven and cooker producers, with a clamping piece that is easy to produce.

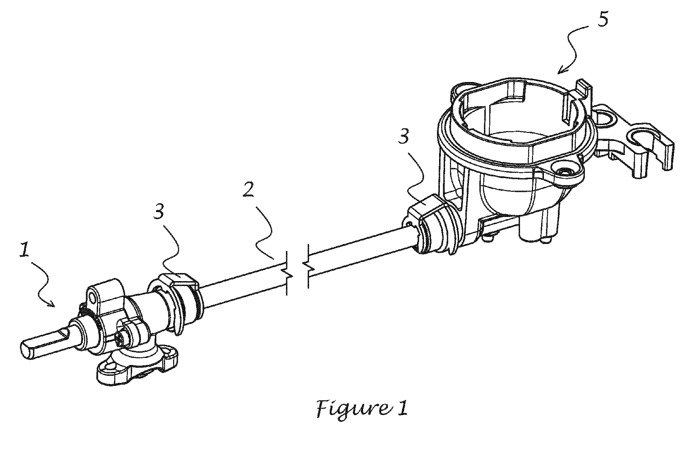

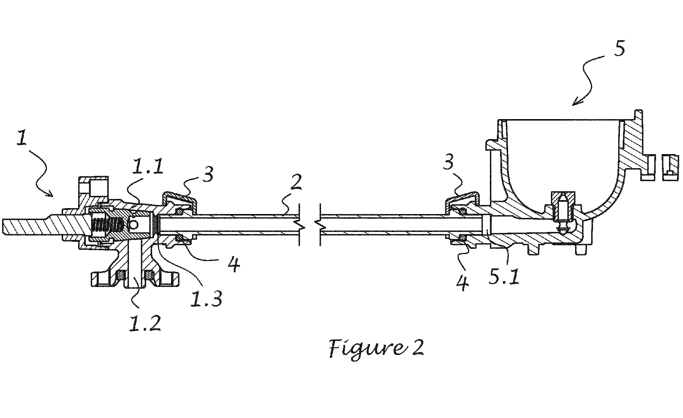

In the application owned by Chiyoda Seisakusho and numbered JP 2002 039472, a pipe connection clamp (3) for connecting a male member (1) and a female member (2) as seen in Fig. 1 is disclosed. This pipe connection clamp (3), as clearly seen in Figs. 1 and 2, is designed for connecting a male member (1) and a female member (2); therefore, a design is introduced taking the recesses and protrusions on these members into consideration. However, the production of this design is difficult and demanding; moreover, it can be applied only in female-male connections as such. Therefore, it is not suitable for use in intermediate distribution pipe connection in domestic cookers within the scope of our invention. The clamping piece according to the invention is a new design applicable to domestic cookers such that it will be placed in tap body, burner gas inlet and intermediate distribution pipe.

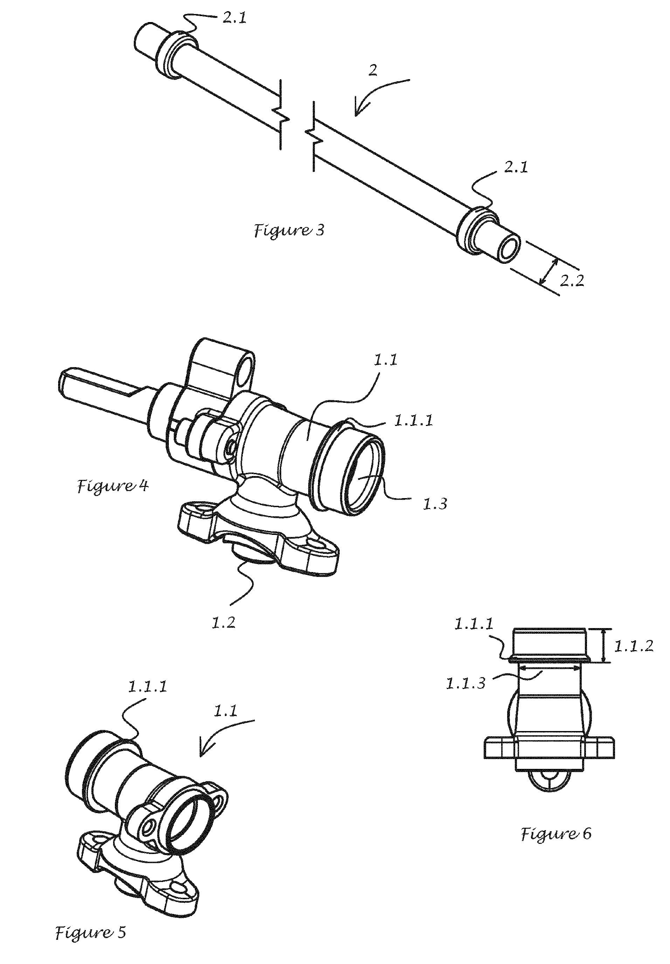

The application made by our firm and numbered TR 2008 06661, on the other hand, discloses a pipe clamping piece (3) for gas taps. In the said clamping piece (3), the connection is performed by means of claws (3.2) provided in the end part thereof. These claws (3.2) are provided in the legs (3.6) of the clamping piece. In the detailed view in Fig. 6, detailed views of these claws (3.2) are given. It is observed that this application also has a complicated and difficult to produce structure compared to the present design according to our invention. A more practical solution is provided in our invention, without any need for complicated designs such as legs or claws. Again, a connection pipe (2) is seen in Fig. 1 of the application numbered TR 2008 06661. Two separate channels (2.1, 2.2) are designed on the pipe (2) for this connection system. With the present invention, the need for providing such channels on the intermediate distribution pipe is eliminated and additional operation times are reduced.

As explained above, the present invention introduces novelty and advantages to the related technical field, quite different from the existing applications in literature.

### OBJECT OF THE INVENTION

The object of the invention is to introduce a clamping piece facilitating the connection of gas taps and burners to intermediate distribution pipe, in domestic cookers or ovens.

Another object of the invention is to introduce a new design where the connection of gas taps and burners to intermediate distribution pipe in domestic cookers or ovens is performed with a low cost.

Another object of the invention is to provide a clamping piece that is practical and requires less mounting time for the producers of domestic cookers or ovens.

In a preferred embodiment of the invention, the said clamping piece comprises a lower segment plate located in gas tap body or burner gas inlet, an upper segment plate located in intermediate distribution pipe, and a connection plate allowing a rigid connection by associating the said lower segment plate with the upper segment plate.

In another preferred embodiment of the invention, the inner diameter of the lower segment plate is such that it will firmly fit in the body diameter in the rear part of the stage.

In another preferred embodiment of the invention, the inner diameter of the upper segment plate is such that it will firmly fit in the outer diameter of the pipe.

In another preferred embodiment of the invention, the distance between the lower segment plate and the upper segment plate is equal to or greater than the length close to the gas outlet section of the body and the length in the pool gas inlet section.

In another preferred embodiment of the invention, the inclination angle of the connection plate is between 5° and 80°.

In another preferred embodiment of the invention, the width of the connection plate is between 3 mm and 12 mm.

In another preferred embodiment of the invention, the thickness of the connection plate is between 0,1 mm and 1 mm.

The structural and the characteristic features and all advantages of the invention will be understood more clearly with the detailed description written by referring to the following figures; therefore, the evaluation needs to be done by taking these figures and the detailed description into consideration.

### DESCRIPTION OF THE FIGURES

Fig. 1 is the perspective view of the gas tap and burner pool, when they are connected to the intermediate distribution pipe by means of the clamping piece according to the invention,
Fig. 2 is the cross-sectional view of the gas tap and burner pool, when they are connected to the intermediate distribution pipe by means of the clamping piece according to the invention,
Fig. 3 is the perspective view of the intermediate distribution pipe,
Fig. 4 is the perspective view of the gas tap,
Fig. 5 is the perspective view of the gas tap body,
Fig. 6 is the top view of the gas tap body,

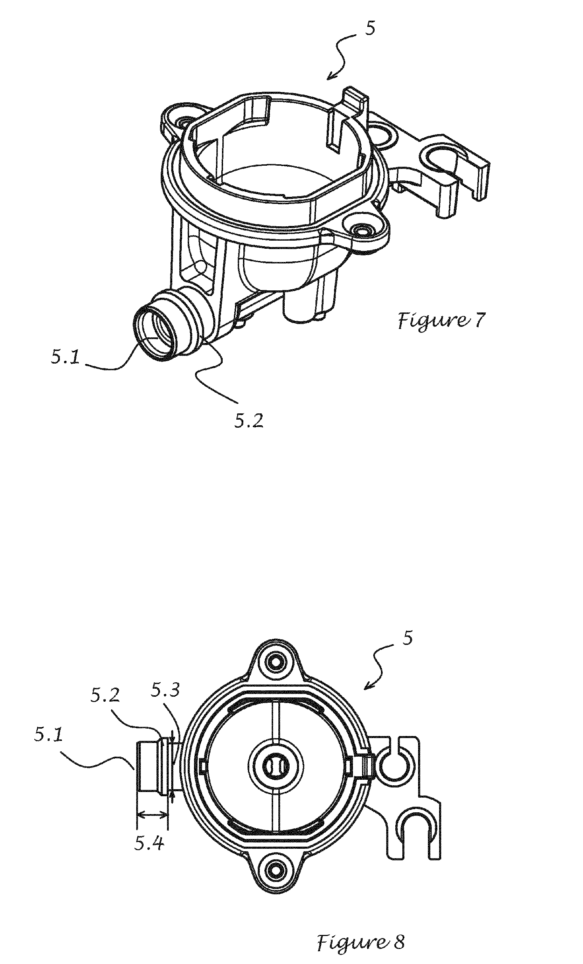

Fig. 7 is the perspective view of the burner pool,
Fig. 8, top view of the burner pool,
Fig. 9 is the perspective view of the clamping piece according to the invention,
Fig. 10 is another perspective view of the clamping piece according to the invention,
Fig. 11 is the top view of the clamping piece according to the invention,
Fig. 12 is the front view of the clamping piece according to the invention,

### REFERENCE NUMERALS

1. Gas tap
   1.1. Body
      1.1.1. Stage
      1.1.2. The length of the body close to gas outlet section
      1.1.3. Body diameter in the rear part of the stage
   1.2. Gas inlet
   1.3. Gas outlet
2. Intermediate distribution pipe
   2.1. Circular stage
   2.2. Intermediate distribution pipe (2) outer diameter
3. Clamping piece
   3.1. Lower segment plate
      3.1.1. Lower segment plate (3.1) inner diameter
   3.2. Upper segment plate
      3.2.1. Upper segment plate (3.2) inner diameter
   3.3. Connection plate
      3.3.1. Width of the connection plate (3.3)
      A. Inclination angle of the connection plate (3.3)
   3.4. Distance between the lower segment plate (3.1) and upper segment plate (3.2)
   3.5. The thickness of the clamping piece (3)
4. O-ring
5. Burner pool
   5.1. Pool gas inlet
   5.2. Pool stage
   5.3. Diameter in the rear part of the pool stage
   5.4. Length in the pool gas inlet section

### DETAILED DESCRIPTION OF THE INVENTION

In Fig. 1, the perspective view of the gas tap (1) and burner pool (5), when they are connected to the intermediate distribution pipe (2) by means of the clamping piece (3) according to the invention, is given. As seen in the figure, the gas tap (1) and burner pool (5) are connected to the intermediate distribution pipe (2) by means of the clamping piece (3) according to the invention. In Fig. 2, the cross-sectional view of the gas tap (1) and burner pool (5), when they are connected to the intermediate distribution pipe (2) by means of the clamping piece (3) according to the invention, is given. The intermediate distribution pipe (2) is connected from one end to the gas outlet (1.3) of the gas tap (1), and from the other end to pool gas inlet (5.1). In order to provide impermeability within the system, two o-rings (4) are used in tap gas outlet (1.3) and pool gas inlet (5.1). Again, as seen in the figure, the intermediate distribution pipe (2) leans from one end against the gas outlet (1.3) of the gas tap (1), and from the other end against pool gas inlet (5.1), and it is fixed by means of the clamping piece (3) according to the invention. Thus, the gas is transferred to the burners where burning occurs by means of intermediate distribution pipe (2) in a safe manner. As seen in Fig. 3, the function of the circular stage (2.1) provided on the intermediate distribution pipe (2) is to center the intermediate distribution pipe (2). Therefore, the diameter of this circular stage (2.1) needs to be such that it will be inserted in the hole to which it will be placed, i.e. gas outlet (1.3) of the gas tap (1), or pool gas inlet (5.1).

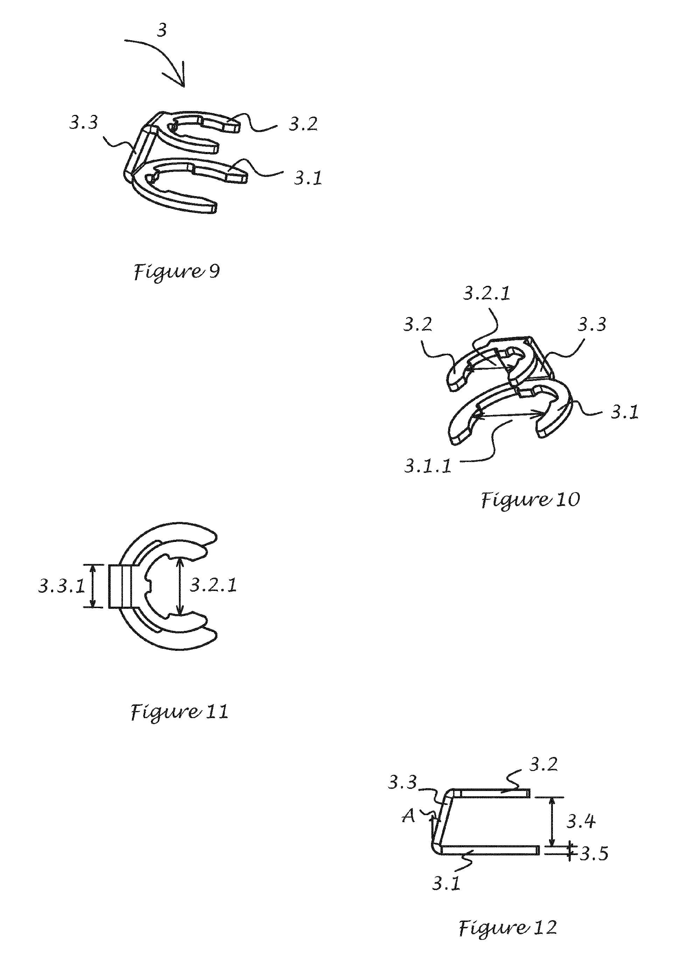

The views of the clamping piece (3) according to the invention are given in Figs. 9, 10, 11, and 12. As seen in the perspective view in Fig. 9, the clamping piece (3) is provided with a lower segment plate (3.1), an upper segment plate (3.2), and with a connection plate (3.3) associating the said lower segment plate (3.1) and the upper segment plate (3.2). As seen in Figs. 1 and 2, the gas tap (1) is connected to intermediate distribution pipe (2), while the said lower segment plate (3.1) is located in tap body (1.1) and the upper segment plate (3.2) in the intermediate distribution pipe (2). Therefore, it is required that the inner diameter (3.1.1) of the lower segment plate is such that it will firmly fit in the body diameter (1.1.3) in the rear part of the stage (1.1.1). Again, it is needed that the inner diameter (3.2.1) of the upper segment plate is such that it will firmly fit in the outer diameter (2.2) of the intermediate distribution pipe. In this way, the body (1.1) is rigidly connected to the intermediate distribution pipe (2) by means of the connection plate (3.3) associating the upper segment plate (3.2) with the lower segment plate (3.1). The function of the stage (1.1.1) provided on the body (1.1) is to prevent the lower segment plate (3.1) from being displaced. While the burner is connected from the other end of the intermediate distribution pipe (2), the lower segment plate (3.1) is located in the pool gas inlet (5.1) section of the burner pool (5), and the upper segment plate (3.2) in the intermediate distribution pipe (2). A circular pool stage (5.2) is provided in the said pool gas inlet (5.1) section. The function of the said pool stage (5.2) is again to prevent the lower segment plate (3.1) from being displaced. Therefore, it is required that the inner diameter (3.1.1) of the lower segment plate is such that it will also firmly fit in the diameter (5.3) in the rear part of the pool stage.

The said connection plate (3.3) has a certain inclination angle. This inclination angle is formed by the diameter difference between the lower segment plate (3.1) and the upper segment plate (3.2). The said inclination angle (A) of the connection plate can be between 5° and 80°. Again, the width (3.3.1) of this connection plate (3.3), which plays an important role in rigid connection of the body (1.1) and of the intermediate distribution pipe (2), can be between 3 mm and 12 mm. Moreover, in order for the clamping piece (3) to perform its function of connecting between gas tap (1) and burner with the intermediate distribution pipe (2), the distance (3.4) between the said lower segment plate (3.1) and the upper segment plate (3.2) can be equal to or greater than the length (1.1.2) close to the gas outlet section of the body, and the length (5.4) in the pool gas inlet section. Thus, the gas tap (1) is connected to the intermediate distribution pipe (2). In case that the gas tap (1) is needed to be dismounted due to a breakdown or for any other reason, it will be enough to remove the clamping piece (3) only.

Again, the production of the newly developed clamping piece (3) is fairly easy and it can be produced as a single piece. The plate having a certain thickness is processed in this form via laser cutting or other plate processing methods. Afterwards, the processed part is bent from two ends thereof, thereby achieving the clamping piece (3). The thickness of the said clamping piece (3) can be between 0,1 mm and 1 mm.

The invention can be used in the connection of all gas taps and burners to intermediate distribution pipe, in domestic cookers or ovens.

The protection scope of this application is stated under the claims and cannot be restricted to the descriptions given only for illustrative purposes, because it is clear that any person skilled in the art can produce the novelty provided with the invention, without drifting apart from the main subject of the invention and/or he/she can apply this novelty to the other fields used in the related technique with similar purposes. Therefore, it is obvious that such embodiments will lack novelty, and especially will lack the criteria of exceeding the prior art, i.e. comprising inventive step.

## Claims

1. A clamping piece (3) that facilitates the connection of gas taps and burners in domestic cookers, to the intermediate distribution pipe (2); **characterized in that**, in order to connect the intermediate distribution pipe (2) with at least one circular stage (2.1) thereon so as to be centered in the hole where it will be located, with the gas tap (1) and/or with the burner pool (5), the said clamping piece (3) consists of a lower segment plate (3.1) located in the pool gas inlet (5.1) section provided in the pool stage (5.2) of the burner or in the body (1.1) of the gas tap (1) with a stage (1.1.1); an upper segment plate (3.2) located in intermediate distribution pipe (2); and a connection plate (3.3) allowing rigid connection by associating the said lower segment plate (3.1) and the upper segment plate (3.2).

2. A clamping piece (3) according to Claim 1; **characterized in that**, in order for the said intermediate distribution pipe (2) to be connected to the gas tap (1) and/or burner pool (5), the inner diameter (3.1.1) of the lower segment plate is such that it will firmly fit in the body diameter (1.1.3) in the rear part of the stage (1.1.1), and in the diameter (5.3) in the rear part of the pool stage.

3. A clamping piece (3) according to Claim 1; **characterized in that**, in order for the said intermediate distribution pipe (2) to be connected to the gas tap (1) and/or burner pool (5), the inner diameter (3.2.1) of the said upper segment plate is such that it will firmly fit in the outer diameter (2.2) of the distribution pipe.

4. A clamping piece (3) according to Claim 1; **characterized in that** the distance (3.4) between the said lower segment plate (3.1) and the upper segment plate (3.2) is equal to or greater than the length (1.1.2) close to the gas outlet section of the body, and the length (5.4) in the pool gas inlet section.

5. A clamping piece (3) according to Claim 1; **characterized in that** the inclination angle (A) of the connection plate (3.3) is between 5° and 80°.

6. A clamping piece (3) according to Claim 1; **characterized in that** the width (3.3.1) of the connection plate (3.3) is between 3 mm and 12 mm.

7. A clamping piece (3) according to Claim 1; **characterized in that** the thickness (3.5) of the clamping piece (3) is between 0,1 mm and 1 mm.
